# EUROPÄISCHE PATENTSCHRIFT

(11) **EP 2 674 326 B1**
(45) Veröffentlichungstag und Bekanntmachung des Hinweises auf die Patenterteilung: **25.09.2019**
(21) Anmeldenummer: 13164092.2
(22) Anmeldetag: 17.04.2013
(51) Int. Cl.: B60Q 1/14

(54) **Verfahren und Vorrichtung zum Betreiben eines Scheinwerfers für ein Kraftfahrzeug**
Device and method for operating a headlight for a motor vehicle
Procédé et dispositif de fonctionnement d'un phare pour un véhicule automobile

(30) Priorität: 15.06.2012 DE 102012210157
(43) Veröffentlichungstag der Anmeldung: 18.12.2013
(73) Patentinhaber: ROBERT BOSCH GMBH, 70442 Stuttgart (DE)
(72) Erfinder: Foltin, Johannes, 71254 Ditzingen (DE)

(56) Entgegenhaltungen:
- EP-A1- 1 555 157
- CH-A- 509 895
- DE-A1- 3 436 391
- DE-A1-102005 017 933
- DE-A1-102009 054 227

## Beschreibung

### Stand der Technik

Die Erfindung betrifft ein Verfahren zum Betreiben eines Scheinwerfers für ein Kraftfahrzeug, der in mindestens zwei Leuchtzuständen betrieben werden kann. Ferner betrifft die Erfindung eine entsprechende Steuer- und Auswerteeinheit sowie ein entsprechendes Computerprogrammprodukt.

Auf dem Gebiet der Scheinwerfer für Kraftfahrzeuge ist es allgemein bekannt Scheinwerfer in einem Abblendbetrieb oder einem Aufblendbetrieb zu betreiben. DE 10 2008 031 947 A1 beschreibt ein Verfahren zum Bestimmen einer Leuchtweiteneinstellung eines Fahrzeuges. Das Verfahren umfasst ein Bestimmen einer Lage des Fahrzeugs zu einer Umgebung des Fahrzeugs und ein Bestimmen einer Leuchtweiteneinstellung mittels der bestimmten Lage des Fahrzeugs. Ferner wird eine Einstellzeit, welche benötigt wird, um eine automatische Leuchtweiteneinstellung an dem Fahrzeug auf die bestimmte Leuchtweiteneinstellung durchzuführen, bestimmt, und eine Lageänderung des Fahrzeugs während der Einstellzeit prognostiziert. Durch Verknüpfen der anhand der Lage des Fahrzeugs bestimmten Leuchtweiteneinstellung und der während der Einstellzeit prognostizierten Lageänderung des Fahrzeugs wird eine korrigierte Leuchtweiteneinstellung bestimmt.

DE 102008013603 A1 beschreibt ein Lichtmodul für eine Beleuchtungseinrichtung eines Kraftfahrzeugs mit mehreren matrixartig angeordneten Halbleiterlichtquellen. Im Strahlengang des von den Halbleiterlichtquellen ausgesandten Lichts ist eine Projektionslinsenanordnung angeordnet, die das Licht zur Erzielung einer gewünschten Lichtverteilung auf eine Fahrbahn vor dem Kraftfahrzeug projiziert.

Aus der DE 10 2009 054 227 A1 ist Verfahren zum Steuern einer Scheinwerferanordnung für ein Fahrzeug bekannt, wobei die Scheinwerferanordnung zwei beabstandete Scheinwerfer aufweist, bei dem Verkehrsteilnehmer in Fahrtrichtung vor dem Fahrzeug erfasst werden und eine erste Gesamtlichtverteilung erzeugbar ist, bei der die Leuchtweite auf einer ersten Seite einer Mittelachse größer ist als auf der anderen, zweiten Seite dieser Mittelachse, und eine zweite Gesamtlichtverteilung erzeugbar ist, bei der die Gesamtlichtverteilung so regelbar ist, dass sie in Richtung zumindest eines erfassten Verkehrsteilnehmers eine Leuchtweite aufweist, die geringer als der Abstand zu dem erfassten Verkehrsteilnehmer ist, und die in einer anderen Richtung eine Leuchtweite aufweist, die größer als der Abstand zu dem erfassten Verkehrsteilnehmer ist. Beim Umschalten von der ersten Gesamtlichtverteilung auf die zweite Gesamtlichtverteilung wird zunächst die Leuchtweite zumindest eines Scheinwerfers auf der ersten Seite der Mittelachse zumindest so weit verringert, dass sie kleiner ist als der Abstand zu dem erfassten Verkehrsteilnehmer und danach die zweite Gesamtlichtverteilung erzeugt wird. Das Umschalten zwischen den beiden Leuchtzuständen für die Leuchtweite in Richtung einer Nachbarfahrbahn wird in Abhängigkeit einer Erfassungsrate von den weiteren Verkehrsteilnehmern verzögert.

Aus der DE 10 2005 017 933 A1 ist eine automatische Abblendvorrichtung mit zwei Modulen bekannt, wobei das eine Modul eine Fotozelle und eine Steuereinheit und das andere Modul eine Kamera und einen Rechner aufweist. Die Fotozelle ist im Bereich des Kühlergrills eines Fahrzeugs eingebaut, derart, dass das von einem Scheinwerfer eines entgegenkommenden Fahrzeugs abgegebene Licht auf die Fotozelle trifft, dass die Fotozelle mit der Steuereinheit elektrisch verbunden ist, wobei die Steuereinheit unter der Motorhaube montiert und mit einer Steuereinheit für einen Scheinwerfer derart gekoppelt ist, dass der Fernlichtscheinwerfer selbsttätig bei Erkennen eines durch den Scheinwerfer des entgegenkommenden Fahrzeugs bewirkten Lichtkegels in ein Abblendlicht umgeschaltet wird und dass die Steuereinheit auf ein Anzeigeelement eines Cockpits des Fahrzeugs derart einwirkt, dass dem Fahrer signalisiert wird, dass die Fernlichtfunktion abgeschaltet ist. Bei Erkennen des Nichtvorhandenseins eines Scheinwerferkegels des entgegenkommenden Fahrzeugs wird das Fernlicht erst in einer Verzögerungszeit selbsttätig wieder eingeschaltet.

Aus der CH 509 895 A ist ein automatisches Lichtsteuerungssystem für ein Straßenfahrzeug bekannt, umfassend eine Steuerschaltung, in der die Abzweigungen ein empfindlicher Detektor und eine Relaisaktivierung und - deaktivierung der großen Lichter sind und wobei die monostabile Schaltung eine Verzögerung ist.

Aus der DE 34 36 391 A1 ist eine Schaltung für Kraftfahrzeug-Scheinwerfer bekannt. Zur Vermeidung einer Blendung entgegenkommender Fahrzeuge bei gleichzeitiger Verbesserung der Ausleuchtung der vor dem Fahrzeug liegenden Straße wird, die {bei Rechtsverkehr) in Fahrtrichtung rechte Lichtquelle unverzögert, die in Fahrtrichtung linke Lichtquelle jedoch verzögert von Fahrlicht auf Fernlicht umgeschaltet.

Aus der EP 1 555 157 A1 ist eine Lichtsteuervorrichtung für ein Fahrzeug bekannt, in der ein Steuerabschnitt bestimmt, ob eine von einem Helligkeitssensor erfasste Beleuchtungsstärke eine erste Referenzbeleuchtungsstärke erreicht. Der Steuerabschnitt führt ein Ein- oder Ausschalten durch Steuerung eines Lichts des Fahrzeugs basierend auf dem bestimmten Ergebnis. Wenn der Steuerabschnitt ein Umgebungsänderungssignal von einer Umgebungsänderungserfassungseinrichtung empfängt, verwendet der Steuerabschnitt eine zweite Bezugsbeleuchtungsstärke höher als die erste Bezugsbeleuchtungsstärke anstelle der ersten Bezugsbeleuchtungsstärke und führt die Ein / Aus-Steuerung durch, wenn die vom Beleuchtungsstärkesensor erfasste Beleuchtungsstärke die zweite Referenzbeleuchtungsstärke erreicht. Dementsprechend können Fahrzeuglichter in Übereinstimmung mit einer äußeren Umgebung des Fahrzeugs geeignet ein- oder ausgeschaltet werden. Der Steuerabschnitt kann die Ein- oder Aus-Steuerung des Lichts zu einer Zeit ausführt, die um eine vorbestimmte Zeit verzögert ist.

### Offenbarung der Erfindung

Gemäß einem Aspekt der Erfindung wird ein Verfahren gemäß Anspruch 1 bereitgestellt zum Betreiben eines Scheinwerfers für ein Kraftfahrzeug, der in mindestens zwei Leuchtzuständen betrieben werden kann.

Gemäß einem weiteren Aspekt der Erfindung wird eine Steuer- und Auswerteeinheit gemäß Anspruch 8 bereitgestellt zum Betreiben eines Scheinwerfers für ein Kraftfahrzeug, der in mindestens zwei Leuchtzuständen betrieben werden kann.

Gemäß einem weiteren Aspekt der Erfindung wird ein Computerprogrammprodukt mit einem Trägermedium gemäß Anspruch 9 bereitgestellt, das einen Programmcode aufweist, der dazu ausgebildet ist, ein Verfahren nach Anspruch 1 auszuführen, wenn der Programmcode auf einer Auswerte- und Steuereinheit eines Kraftfahrzeuges ausgeführt wird.

Nach dem neuen Verfahren wird der zeitliche Verlauf der Einflussgröße dazu eingesetzt die Änderung des Betriebs des Scheinwerfers zu verzögern. In anderen Worten, eine Historie der Einflussgröße wird erfasst und vorzugsweise ausgewertet. Die Änderung des Betriebs des Scheinwerfers wird dann abhängig von dieser Historie oder einem Ergebnis des Auswertens verzögert.

Vorteilhaft hierbei ist, dass unnötige oder fehlerhafte Änderung des Betriebs des Scheinwerfers verringert oder ganz verhindert werden können. Somit ergibt sich eine erhöhte Fahrsicherheit für den Fahrer des Kraftfahrzeugs sowie für weitere Fahrer in weiteren Kraftfahrzeugen, die sich in einem Wirkungsbereich des Scheinwerfers befinden. Dies ist dadurch begründet, dass beispielsweise sehr häufige oder unnötige Änderungen des Betriebs des Scheinwerfers verhindert werden, wodurch ein nachvollziehbareres Verhalten für die Änderungen des Betriebs des Scheinwerfers für den Fahrer und für die weiteren Fahrer erreicht wird. Folglich verringert sich eine Irritation des Fahrers sowie der weiteren Fahrer durch weniger und nachvollziehbarere Änderungen des Betriebs. Besonders vorteilhaft ist das Verfahren und die Steuer- und Auswerteeinheit dann, wenn die Änderung des Betriebs des Scheinwerfers in dem Kraftfahrzeug durch eine Steuerelektronik automatisch erfolgt, beispielsweise durch einen Fernlichtassistenten. In diesem Fall wird eine von der Steuerelektronik beabsichtigte automatische Änderung durch das neue Verfahren und/oder die neue Steuer- und Auswerteeinheit überprüft und entweder validiert oder angepasst.

Unter dem Scheinwerfer wird hier vorzugsweise ein Frontscheinwerfer des Kraftfahrzeugs verstanden. Insbesondere ein Frontscheinwerfer, der für eine normale Straßenausleuchtung und vorzugsweise bei einer nebelfreien Wetterlage ausgebildet ist. Diese Art von Scheinwerfern wird am häufigsten eingesetzt, sodass die sicherheitstechnische Verbesserung der Steuerung dieser Frontscheinwerfer den größten Sicherheitsgewinn für den Straßenverkehr ermöglicht.

Das neue Verfahren steuert Scheinwerfer mit zumindest zwei unterschiedlichen Leuchtzuständen. Wie eingangs erwähnt ist aus dem Stand der Technik eine Vielzahl unterschiedlicher Scheinwerferkonzepte mit unterschiedlichen Leuchtzuständen bekannt, von denen hier drei Scheinwerferkonzepte exemplarisch aufgezeigt werden, die für eine Verwendung zusammen mit dem neuen Verfahren und/oder der neuen Steuer- und Auswerteeinheit besonders gut geeignet sind.

Als ein erstes Scheinwerferkonzept sind Scheinwerfer bekannt, die in mindestens zwei Leuchtzuständen betrieben werden können, ein Aufblendbetrieb und Abblendbetrieb. Typischerweise erfolgt hier die Änderung des Betriebs des Scheinwerfers auf diskrete Weise, wobei das Aufblendlicht alternativ oder zusätzlich zu dem Abblendlicht an- oder abgeschaltet wird.

Als ein zweites Scheinwerferkonzept sind Scheinwerfer bekannt, die eine Leuchtweiteneinstellung aufweisen. Diese Scheinwerfer können mit der Leuchtweiteneinstellung typischerweise in einer Vielzahl von Leuchtzuständen betrieben werden. Die Vielzahl von Leuchtzuständen ergibt sich aus einem ersten Leuchtzustand mit einer geringstmöglichen Leuchtweite, einem zweiten Leuchtzustand mit einer größtmöglichen Leuchtweiten sowie mindestens einem dritten Leuchtzustand dessen Leuchtweite zwischen der geringstmöglichen Leuchtweite und der größtmöglichen Leuchtweite liegt. Typischerweise sind derartige Scheinwerfer kontinuierlich oder quasi-kontinuierlich in ihrer Leuchtweite steuerbar.

Als ein drittes Scheinwerferkonzept sind Scheinwerfer bekannt, die matrixartig angeordnete Leuchtquellen und/oder eine Vielzahl matrixartig angeordneter optischer Linsen aufweisen. Diese Scheinwerfer können typischerweise komplexe Lichtbilder in einen Wirkbereich des Scheinwerfers projizieren. Hierbei kann eine Ausleuchtung einzelner Umgebungsbereiche sehr selektiv verstärkt, verringert oder ausgespart werden. Als unterschiedliche Leuchtzustände werden bei diesen Scheinwerfern unterschiedliche Lichtbilder betrachtet.

Als Einflussgröße eignen sich insbesondere Größen, die eine Änderung des Leuchtzustands wahrscheinlich oder notwendig machen können. Vorzugsweise ist diese Größe messtechnisch erfassbar. Beispielsweise können als Einflussgröße Momentanwerte allgemeiner Steuersignale, scheinwerferrelevanter Steuersignale und/oder weiterer Datensignale verwendet werden, die in dem Kraftfahrzeug erfasst werden können. Alternativ oder zusätzlich können auch Umgebungsmesswerte als Einflussgröße eingesetzt werden, die Merkmale der aus der Umgebung aufweisen. Diese Merkmale können beispielsweise ein Ort, eine Zeit, ein Verkehrsaufkommen, Verkehrsinformationen oder Informationen über Existenz und/oder Ort weiterer Kraftfahrzeuge in der Umgebung des Kraftfahrzeugs sein.

Diese Einflussgröße wird gemäß dem neuen Verfahren über ein Zeitintervall hinweg erfasst, wodurch der zeitliche Verlauf der Einflussgröße erfasst wird. Dies kann beispielsweise durch ein Aufzeichnen oder Speichern der Einflussgröße über ein Zeitintervall erfolgen. Vorzugsweise ist das Zeitintervall ein vordefiniertes Zeitintervall, das beispielsweise im Vorfeld durch Versuche ermittelt und in einem Speicher bereitgestellt werden kann. Alternativ oder zusätzlich können erfasste Einflussgrößen in einem Ringspeicher gespeichert werden, woraus sich das Zeitintervall ergibt. Alternativ oder zusätzlich kann das Zeitintervall in Abhängigkeit geeigneter Parameter dynamisch angepasst werden. Ferner ist es denkbar, dass die Einflussgrößen über die Zeit gewichtet werden. Folglich ist es möglich, die Abhängigkeit des Verzögerns von ausgewählten Bereichen des zeitlichen Verlaufs der Einflussgröße relativ zu anderen Bereichen des zeitlichen Verlaufs abhängiger oder weniger abhängig zu machen. Vorteilhaft hierbei ist insbesondere eine Anpassbarkeit einer Auswertung des zeitlichen Verlaufs, die durch das Gewichten der Bereiche des zeitlichen Verlaufs an einen konkreten Anwendungsfall erfolgt. Als Anwendungsfall ist beispielsweise eine unterschiedliche Bewertung von Einflussgrößen bei Stadtfahrten, Überlandfahrten und/oder Autobahnfahrten denkbar.

Das neue Verfahren erfasst zudem ein Steuersignal. Dieses Steuersignal soll die Änderung des Betriebs des Scheinwerfers bewirken. Das Steuersignal kann beispielsweise von einer manuellen Lichtsteuerung oder einer automatischen Lichtsteuerung, vorzugsweise einem Fernlichtassistenten, empfangen werden. Beispielsweise kann das Steuersignal ein gewünschtes Aufblenden, ein gewünschtes Abblenden, eine gewünschte Leuchtweitenveränderung und/oder eine gewünschte Lichtbildveränderung signalisieren. Vorteilhaft hierbei ist, dass das neue Verfahren und/oder die neue Steuer- und Auswerteeinheit mit bereits bestehenden Systemen zusammenwirken kann. Hierdurch wird eine einfache und wirtschaftliche Integration des neuen Verfahrens und/oder der neuen Steuer- und Auswerteeinheit in bestehende Systeme ermöglicht. Auch wird ein einfaches und wirtschaftliches Nachrüsten bestehender Kraftfahrzeuge und Baugruppen für Kraftfahrzeuge ermöglicht. Insgesamt erfolgt somit ein indirektes Steuern des Betriebs des Scheinwerfers durch das Steuersignal. Es ist weiter denkbar den Betrieb des Scheinwerfers durch das Steuersignal dann direkt zu steuern, wenn in Abhängigkeit des zeitlichen Verlaufs um eine Verzögerung von Null verzögert werden soll.

Das Verzögern selbst erfolgt hier in Abhängigkeit des zeitlichen Verlaufs, wobei das Verzögern beispielsweise durch eine feste Zeitspanne definiert werden kann. Diese feste Zeitspanne kann beispielsweise im Vorfeld durch Versuche ermittelt und in einem Speicher bereitgestellt werden. In einer bevorzugten Ausführungsform wird das Verzögern durch eine dynamischen Zeitspanne definiert, die in Abhängigkeit des zeitlichen Verlaufs der Einflussgröße bestimmt wird.

Insgesamt ermöglichen das neue Verfahren und die neue Steuer- und Auswerteeinheit auf vorteilhafte Weise Änderungen des Betriebs des Scheinwerfers für den Fahrer des Kraftfahrzeugs und für Fahrer anderer Kraftfahrzeuge nachvollziehbar zu steuern und somit die Verkehrssicherheit zu erhöhen.

In einer Ausgestaltung wird die Änderung des Betriebs dadurch verzögert, dass ein Beginn der Änderung gegenüber einer verzögerungsfreien Änderung zumindest für eine erste Zeitspanne verhindert wird.

In dieser Ausgestaltung wird die Änderung, die durch das Steuersignal signalisiert wird, zeitlich verschoben. Der Beginn der verzögerungsfreien Änderung ist hierbei der Beginn, der sich dann ergeben würde, wenn das Steuersignal die Änderung direkt steuern würde. Weiter wird unter einer verzögerungsfreien Änderung eine fiktive Änderung des Betriebs des Scheinwerfers verstanden, die sich dann ergeben würde, wenn das Steuersignal die Änderung direkt steuern würde. Das Verzögern gemäß des neuen Verfahrens und/oder der neuen Steuer- und Auswerteeinheit erfolgt somit zusätzlich zu technisch bedingten Zeitverzögerungen der Änderung relativ zu dem Erfassen des Steuersignals, wie beispielsweise Signallaufzeiten, Berechnungszeiten und/oder Schaltzeiten.

Vorteilhaft hierbei ist es, dass das Steuersignal nicht verändert werden muss. Das Verzögern der Änderung kann durch ein zeitliches Verzögern des gesamten Steuersignals umgesetzt werden. Dies führt zu einer besonders einfachen und wirtschaftlichen Umsetzung des neuen Verfahrens und der neuen Steuer- und Auswerteeinheit.

Denkbar ist weiter, dass der Beginn und damit die Änderung vollständig verhindert wird. Dies ergibt sich beispielsweise dann, wenn der Beginn der Änderung solange verzögert wird, dass innerhalb der ersten Zeitspanne ein weiteres erstes Steuersignal empfangen wird, welches eine Rückänderung signalisiert.

In einer weiteren Ausgestaltung wird die Änderung des Betriebs dadurch verzögert, dass eine Geschwindigkeit der Änderung gegenüber der Geschwindigkeit einer verzögerungsfreien Änderung zumindest für eine zweite Zeitspanne verlangsamt wird.

In dieser Ausgestaltung wird die Änderung, die durch das Steuersignal signalisiert wurde, selbst verändert. Die Geschwindigkeit der verzögerungsfreien Änderung ist hierbei die Geschwindigkeit der Änderung, die sich dann ergeben würde, wenn das Steuersignal die Änderung direkt steuern würde. Weiter wird unter einer verzögerungsfreien Änderung eine fiktive Änderung des Betriebs des Scheinwerfers verstanden, die sich dann ergeben würde, wenn das Steuersignal die Änderung direkt steuern würde. Das Verzögern erfolgt somit zusätzlich zu technisch bedingten Zeitdauern der Änderung relativ zu dem Erfassen des Steuersignals, wie beispielsweise Signallaufzeiten, Berechnungszeiten und/oder Schaltzeiten.

Vorteilhaft hierbei ist, dass ein Charakter der Änderung, basierend auf der fiktiven Änderung, angepasst werden kann. Beispielsweise kann die Änderung gegenüber der fiktiven Änderung von Beginn an bis zu ihrem Ende gleichmäßig verlangsamt werden. Alternativ oder zusätzlich ist es denkbar, dass das Verzögern selbst über die Dauer der Änderung verändert wird. Beispielsweise kann dann die Änderung gegenüber der fiktiven Änderung zu Beginn normal verzögert werden und zu ihrem Ende hin immer stärker oder schwächer verzögert werden. Dadurch kann der Beginn der Änderung besonders frühzeitig erfolgen, ohne dass Nachteile einer verzögerungsfreien Änderung entstehen. Dies führt zu einer besonders flexiblen und sicheren Umsetzung des neuen Verfahrens und der neuen Steuer- und Auswerteeinheit. Besonders vorteilhaft ist diese Art des Verzögerns dann, wenn die Änderung eine, vorzugsweise kontinuierliche, Leuchtweiteneinstellung und/oder eine Veränderung eines Lichtbilds betrifft. Hier können Zwischenzustände zwischen dem Leuchtzustand zu Beginn der Änderung und dem Leuchtzustand zu Abschluss der Änderung genutzt werden.

In einer weiteren Ausgestaltung wird als Einflussgröße eine Zustandsgröße des Scheinwerfers erfasst.

In dieser Ausgestaltung erfolgt das Verzögern in Abhängigkeit des zeitlichen Verlaufs des Zustands des Scheinwerfers. Vorteilhaft hierbei ist, dass Zustandsgrößen des Scheinwerfers innerhalb des Kraftfahrzeugs sehr einfach erfasst werden können, da diese typischerweise im Kraftfahrzeug bereits zur Verfügung gestellt werden. Beispielsweise über einen kraftfahrzeugeigenen Datenspeicher oder über einen Daten-Bus.

Als Zustandsgröße eignet sich beispielsweise das Steuersignal oder eine andere scheinwerferbezogene Steuergröße. Auch ist es denkbar einen Zustand des Scheinwerfers mittels eines Sensors zu sensieren, wobei die Zustandsgröße dann in Abhängigkeit von Messdaten des Sensors ermittelt wird. Vorzugsweise wird dann als Sensor ein optischer Sensor eingesetzt, wie beispielsweise ein Fotosensor oder ein Bildsensor.

In einer weiteren Ausgestaltung wird als die Zustandsgröße eine Änderung des Betriebs des Scheinwerfers von einem der Leuchtzustände in einen anderen der Leuchtzustände erfasst.

In dieser Ausgestaltung erfolgt das Verzögern in Abhängigkeit des zeitlichen Verlaufs von bisher erfolgten und erfassten Änderungen. In anderen Worten, das Verzögern erfolgt abhängig von einer Änderungshistorie des Scheinwerfers selbst. Vorzugsweise wird die Änderung dann verzögert oder stärker verzögert, wenn in dem betrachteten Zeitintervall eine hohe Zahl an Änderungen erfolgt ist. Alternativ oder zusätzlich wird vorzugsweise die Änderung dann mit einer Verzögerung von Null verzögert oder weniger stark verzögert, wenn in dem betrachteten Zeitintervall eine niedrige Zahl an Änderungen erfolgt ist. Die konkrete Dimensionierung dieser Zahlen kann beispielsweise durch Versuche in Bezug auf einen konkreten Anwendungsfall erfolgen.

Weiter ist es denkbar, dass beim Erfassen der Zustandsgröße zwischen verschiedenen Arten von Änderungen unterschieden oder als Zustandsgröße nur eine bestimmte Art der Änderungen berücksichtigt wird. Verschiedene Arten können beispielsweise ein Aufblenden, ein Abblenden, eine Erhöhung einer Leuchtweite, eine Verringerung der Leuchtweite oder eine Änderung eines Lichtbilds sein.

Insgesamt wirkt das Verzögern in Abhängigkeit des zeitlichen Verlaufs der Einflussgröße vorzugsweise ähnlich einem Tiefpass mit dynamischen Filtereigenschaften, die von den Änderungen selbst abhängen. Vorteilhaft hierbei ist es, dass Änderungen des Betriebs des Scheinwerfers besonders einfach erfasst, unterschieden und ausgewertet werden können, wodurch eine robuste und wirtschaftliche Umsetzung des Verfahrens und der Steuer- und Auswerteeinheit ermöglicht wird.

In einer weiteren Ausgestaltung wird als die Zustandsgröße eine Dauer mindestens einer der Leuchtzustände erfasst.

In dieser Ausgestaltung erfolgt das Verzögern in Abhängigkeit der Dauer von mindestens einem Leuchtzustand über das Zeitintervall. In anderen Worten, das Verzögern kann abhängig von einem Zeitanteil des mindestens einen Leuchtzustands in dem Zeitintervall erfolgen.

Bevorzugt ist vorgesehen, dass beim Erfassen der Zustandsgröße nur eine Art des Leuchtzustands berücksichtigt wird. Verschiedene Arten können beispielsweise ein Aufblendbetrieb, ein Abblendbetrieb, eine erhöhte Leuchtweite, eine verringerte Leuchtweite oder ein bestimmtes Lichtbild sein. Besonders bevorzugt ist es, wenn der Aufblendbetrieb oder die erhöhte Leuchtweite berücksichtigt werden.

Vorzugsweise wird die Änderung dann verzögert oder stärker verzögert, wenn in dem betrachteten Zeitintervall ein großer Zeitanteil des Leuchtzustands vorliegt, insbesondere des Abblendbetriebs oder der verringerten Leuchtweite.

Alternativ oder zusätzlich wird die Änderung vorzugsweise dann mit einer Verzögerung von Null verzögert oder weniger stark verzögert, wenn in dem betrachteten Zeitintervall ein niedriger Zeitanteil des entsprechenden Leuchtzustands vorliegt. Die konkrete Dimensionierung des Zeitanteils kann beispielsweise durch Versuche in Bezug auf einen konkreten Anwendungsfall erfolgen.

Vorteilhaft hierbei ist es, dass die Dauer von Leuchtzuständen des Scheinwerfers besonders einfach erfasst, unterschieden und ausgewertet werden können, wodurch eine robuste und wirtschaftliche Umsetzung des Verfahrens und der Steuer- und Auswerteeinheit ermöglicht wird.

Besonders bevorzugt ist es, wenn als Zustandsgröße sowohl eine Änderung des Betriebs des Scheinwerfers als auch eine Dauer des Leuchtzustands erfasst wird. Somit wird eine besonders robuste und sichere Umsetzung des Verfahrens und der Steuer- und Auswerteeinheit ermöglicht.

Gemäß der Erfindung wird als Einflussgröße mindestens ein Umgebungsmesswert für eine Umgebung des Kraftfahrzeugs erfasst.

In dieser Ausgestaltung erfolgt das Verzögern in Abhängigkeit des zeitlichen Verlaufs von Umgebungsmesswerten, die vorzugsweise mittels eines Sensors erzeugt werden. Als Sensoren sind Nahbereichssensoren bevorzugt, wie beispielsweise ein Bildsensor, ein Stereo-Bildsensor-Paar, ein Radar-Sensor, ein Ultraschallsensor und/oder ein Lidar-Sensor. Ferner wird hier vorzugsweise unter dem Umgebungsmesswert für den Bildsensor mindestens ein Bild verstanden. Entsprechend wird dann unter dem Verlauf des Umgebungsmesswerts ein Video verstanden.

Vorteilhaft hierbei ist, dass das Verzögern von einem zeitlichen Verlauf von Merkmalen und/oder Ereignissen der Umgebung abhängig gemacht werden kann. Beispielsweise können als Merkmale Tages- oder Nachtzeit; Nick-, Gier- und/oder Rollverhalten des Kraftfahrzeugs; Verkehrszeichen, Verkehrsleitsignale, Fahrbahnmarkierungen; Verkehrsteilnehmer, wie beispielsweise Fußgänger, entgegenkommende und/oder vorausfahrende Kraftfahrzeuge; Hindernisse und/oder urbane Regionen verwendet werden. Ferner werden dann ihre Veränderungen über die Zeit oder deren Bewegungen für das Verzögern der Änderung berücksichtigt. Vorteilhaft hierbei ist, dass eine besonders anpassungsfähige und genaue Verzögerung der Änderung in Abhängigkeit des Verlaufs der Umgebungsmesswerte umgesetzt werden kann.

Alternativ oder zusätzlich ist es denkbar ein Telekommunikationsmittel oder ein Ortungssystem einzusetzen, um den Umgebungsmesswert zu erfassen. Dies können beispielsweise ein GPS-System, ein mobiles Internetsystem, ein Kommunikationssystem zwischen mindestens zwei Kraftfahrzeugen und/oder ein Kommunikationssystem zwischen dem Kraftfahrzeug und einer Infrastruktur sein.

Gemäß der Erfindung wird aus dem zeitlichen Verlauf des Umgebungsmesswerts eine Wahrscheinlichkeit für ein Erscheinen eines Fremdfahrzeugs in einem Wirkbereich des Scheinwerfers bestimmt, wobei das Steuern in Abhängigkeit der Wahrscheinlichkeit verzögert wird.

In dieser Ausgestaltung erfolgt das Verzögern in Abhängigkeit der Wahrscheinlichkeit. Die Wahrscheinlichkeit kann dabei beispielsweise als Wahrscheinlichkeitswert definiert werden. Alternativ oder zusätzlich kann der Verlauf des Umgebungsmesswerts mit vordefinierten Referenzverläufen verglichen werden. Den vordefinierten Referenzverläufen können dann Wahrscheinlichkeitswerte zugeordnet sein, die beispielsweise im Vorfeld durch Versuche ermittelt worden sind. Die Referenzverläufe selbst können ebenfalls durch Versuche ermittelt werden oder auch durch ein Training, wenn das Verfahren in Zusammenhang mit einem lernenden System verwendet wird, wie beispielsweise einem neuronalen Netz. Sobald eine ausreichende Übereinstimmung zwischen dem Verlauf des Umgebungsmesswerts mit mindestens einem der vordefinierten Referenzverläufe vorliegt, kann dem Verlauf des Umgebungsmesswerts somit eine Wahrscheinlichkeit zugeordnet werden.

Vorzugsweise wird in dieser Ausgestaltung als der Verlauf des Umgebungsmesswerts das Video verwendet. Vorteilhaft hierbei ist die große Menge an Umgebungsinformation und Merkmalen, die ausgewertet werden können, wobei eine Prädikation zukünftiger Verkehrssituationen erfolgt, die eine besonders gute Zeitabstimmung beim Verzögern ermöglicht. Die Wahl der zu verwendenden Merkmale kann dann in Abhängigkeit eines konkreten Anwendungsfalls sehr individuell erfolgen.

Als ein solches Merkmal kann beispielsweise ein Koronaeffekt verwendet werden, der dann entsteht, wenn das Kraftfahrzeug und ein entgegenkommendes Kraftfahrzeug durch ein Hindernis in jeweiliger Fahrtrichtung zueinander verdeckt sind. In anderen Worten, wird bei einer Nachtfahrt über einem Hindernis, wie einem Hügel, ein auftauchender Lichtschein im Verlauf des Umgebungsmesswerts detektiert, so ist von einer hohen Wahrscheinlichkeit auszugehen, dass in naher Zukunft ein Fremdfahrzeug in dem Wirkbereich des Scheinwerfers erscheinen wird. Somit kann die besonders gute Zeitabstimmung erreicht werden und damit besonders sicher verzögert werden, bevor oder wenn das Fremdfahrzeug erscheint. Folglich werden auch unnötige und irritierende Änderungen vermieden. Insbesondere deshalb, weil der Zeitraum von dem Detektieren des Lichtscheins bis zu einem Erscheinen des Fremdfahrzeugs typischerweise zu gering ist, um beispielsweise in diesem Zeitraum aufzublenden, da dann ein sehr kurzfristiges und damit irritierendes Abblenden notwendig werden würde.

In einer weiteren Ausgestaltung wird das Steuern in Abhängigkeit von Änderungen, Dauern und/oder Frequenzen zumindest von Teilen des zeitlichen Verlaufs der Einflussgröße verzögert.

In dieser Ausgestaltung wird der Verlauf der Einflussgröße analysiert, um das Verzögern an den Verlauf anzupassen.

Änderungen in dem Verlauf können beispielsweise Schaltflanken in dem Steuersignal oder auch eine hohe Bilddynamik in der Videoaufnahme sein. Unter einer hohen Bilddynamik wird hier eine Vielzahl an relevanten Bildveränderungen über das betrachtete Zeitintervall verstanden, wie diese beispielsweise durch eine Vielzahl an entgegenkommenden Kraftfahrzeugen oder durch eine Vielzahl an Straßenlaternen erzeugt wird.

Unter Dauer wird hier vorzugsweise die Dauer eines vorbestimmen Zustands der Einflussgröße in dem Zeitintervall verstanden. Besonders bevorzugt ist es, wenn als Dauer eine mittlere Dauer in dem Zeitintervall ermittelt wird, in der der vorbestimmte Zustand der Einflussgröße ununterbrochen angehalten hat. Beispielsweise für welche mittlere Zeitdauer der Scheinwerfer in dem Zeitintervall in dem Aufblendbetrieb ununterbrochen betrieben wurde.

Unter Frequenzen werden hier vorzugsweise Änderungshäufigkeiten verstanden. Somit kann eine Häufigkeitsanlyse mit bekannten statistischen Mitteln erfolgen, deren Ergebnis dann das Verzögern definiert. Diese Frequenzen können beispielsweise durch Änderungshäufigkeiten oder Schalthäufigkeiten in dem Steuersignal oder eine Häufigkeit von erkannten Verkehrsteilnehmern abgeleitet werden.

Besonders bevorzugt ist es wenn für die Abhängigkeit zwischen der Einflussgröße und einer Störempfindung des Fahrers im Vorfeld beispielsweise statistische Untersuchungen stattfinden. Daraus kann dann ein mathematisches Modell für die Abhängigkeit des Verzögerns von der Einflussgröße besonders gut ermittelt werden. Schließlich kann dann das mathematische Modell die Abhängigkeit des Verzögerns von der Einflussgröße definieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Figur 1 ein erstes Kraftfahrzeug mit einer Steuer- und Auswerteeinheit, dass als Einflussgröße eine Zustandsgröße eines Betriebs eines Scheinwerfers erfasst,
Figur 2 ein Blockschaltbild von Komponenten aus Fig. 1,
Figur 3 schematische Verläufe von Zustandsgrößen des Scheinwerfers, die unterschiedlich verzögert werden,
Figur 4 ein zweites Kraftfahrzeug mit einem erfindungsgemäßen Steuer- und Auswerteeineit, dass als Einflussgröße einen Umgebungsmesswert erfasst,
Figur 5 das Kraftfahrzeug aus Fig. 4, wobei eine Wahrscheinlichkeit eines Erscheinens eines Fremdfahrzeugs ermittelt wird, und
Figur 6 ein Flussdiagramm für ein bevorzugtes Ausführungsbeispiel des neuen Verfahrens.

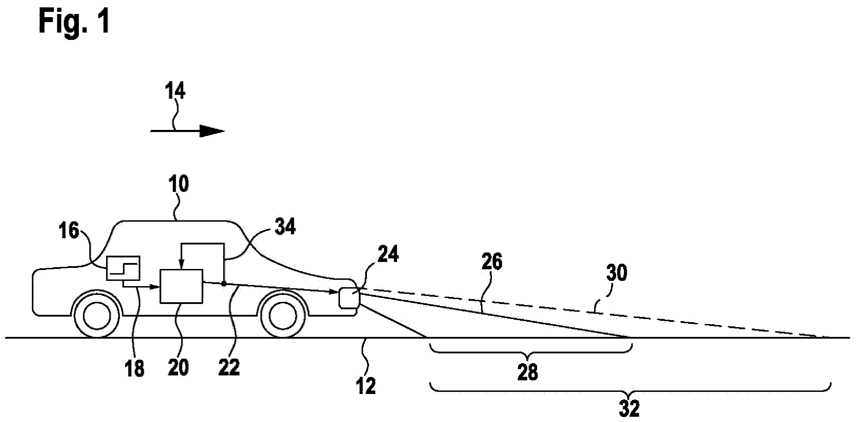

In Figur 1 ist ein Kraftfahrzeug in seiner Gesamtheit mit der Bezugsziffer 10 bezeichnet. Das Kraftfahrzeug 10 bewegt sich auf einer Strasse 12 in Richtung eines Pfeils 14.

Das Kraftfahrzeug 10 weist einen Signalgenerator 16 auf, der ein erstes Steuersignal erzeugen kann. Der Signalgenerator 16 ist hier ein Fernlichtassistent, der das erste Steuersignal erzeugt, dass zwischen einem Auf- oder ein Abblendbetrieb automatisch umschalten soll. In anderen Ausführungsbeispielen kann der Signalgenerator 16 alternativ oder zusätzlich mit einer Schaltvorrichtung zusammenwirken, die von einem Fahrer manuell betätigt werden muss, um das erste Steuersignal zu erzeugen.

Das erste Steuersignal wird über einen Signalpfad 18 zu einer Steuer- und Auswerteeinheit 20 geleitet. Die Steuer- und Auswerteeinheit 20 erzeugt ein zweites Steuersignal, das über eine Signalpfad 22 an einen Scheinwerfer 24 weitergeleitet wird. Der Scheinwerfer 24 kann hier in zwei unterschiedlichen Leuchtzuständen betrieben werden, dem Abblendbetrieb und dem Aufblendbetrieb. Das zweite Steuersignal bewirkt dabei eine Änderung von einem der Leuchtzustände in den jeweils anderen Leuchtzustand. Der Abblendbetrieb ist durch einen ersten Leuchtkegel 26 dargestellt, der einen ersten Fahrbahnabschnitt 28 der Fahrbahn 12 beleuchtet. Der Aufblendbetrieb ist durch einen zweiten Leuchtkegel 30 dargestellt, der einen zweiten Fahrbahnabschnitt 32 der Fahrbahn 12 beleuchtet, wobei der zweite Fahrbahnabschnitt 32 den ersten Fahrbahnabschnitt 28 aufweist.

In weiteren Ausführungsbeispielen können auch Scheinwerfer eingesetzt werden, die mehr als zwei Leuchtzustände besitzen, beispielsweise Scheinwerfer mit einer Leuchtweiteneinstellung oder mit veränderbaren Lichtbildern. In diesen Ausführungsbeispielen kann dann eine kontinuierliche oder quasikontinuierliche Änderung einer Beleuchtung des Fahrbahnabschnitts 28 in eine Beleuchtung des Fahrbahnabschnitts 32 erfolgen. Zudem liegt in diesen Ausführungsbeispielen dann ein Abblendbetrieb vor, wenn der Fahrbahnabschnitts 28 zumindest im Wesentlichen beleuchtet wird. Zudem liegt in diesen Ausführungsbeispielen liegt dann ein Aufblendbetrieb vor, wenn der Fahrbahnabschnitts 32 zumindest im Wesentlichen beleuchtet wird.

Das zweite Steuersignal steuert die Leuchtzustände des Scheinwerfers 24 direkt. Somit ist es ein Maß für den Betrieb des Scheinwerfers 24 und folglich eine Zustandsgröße des Scheinwerfers 24. Daher wird das zweite Steuersignal aus dem Signalpfad 22 als Einflussgröße über einen Signalpfad 34 von der Steuer- und Auswerteeinheit 20 erfasst.

Die Steuer- und Auswerteeinheit 20 zeichnet den Verlauf des zweiten Steuersignals für ein festes Zeitintervall auf. Der zum Zeitpunkt des Empfangens des ersten Steuersignals bereits aufgezeichnete Verlauf wird durch die Steuer- und Auswerteeinheit 20 ausgewertet. Dann wird das erste Steuersignal in Abhängigkeit eines Ergebnisses der Auswertung verzögert.

In dem dargestellten Ausführungsbeispiel wird eine Änderung von dem Abblendbetrieb in einen Aufblendbetrieb dadurch verzögert, dass das erste Steuersignal gespeichert und nach Ablauf einer ersten Zeitspanne als zweites Steuersignal über den Signalpfad 22 ausgegeben wird. Die Dauer der ersten Zeitspanne ist dabei abhängig von dem Ergebnis der Auswertung.

In weiteren Ausführungsbeispielen in denen eine kontinuierliche oder quasikontinuierliche Änderung der Beleuchtung des Fahrbahnabschnitts 28 in die Beleuchtung des Fahrbahnabschnitts 32 erfolgen kann, kann das erste Steuersignal von der Steuer- und Auswerteeinheit 20 erfasst und in Abhängigkeit des Ergebnisses der Auswertung derart verändert werden, dass die Geschwindigkeit der Änderung des Betriebs des Scheinwerfers 24 selbst verlangsamt wird.

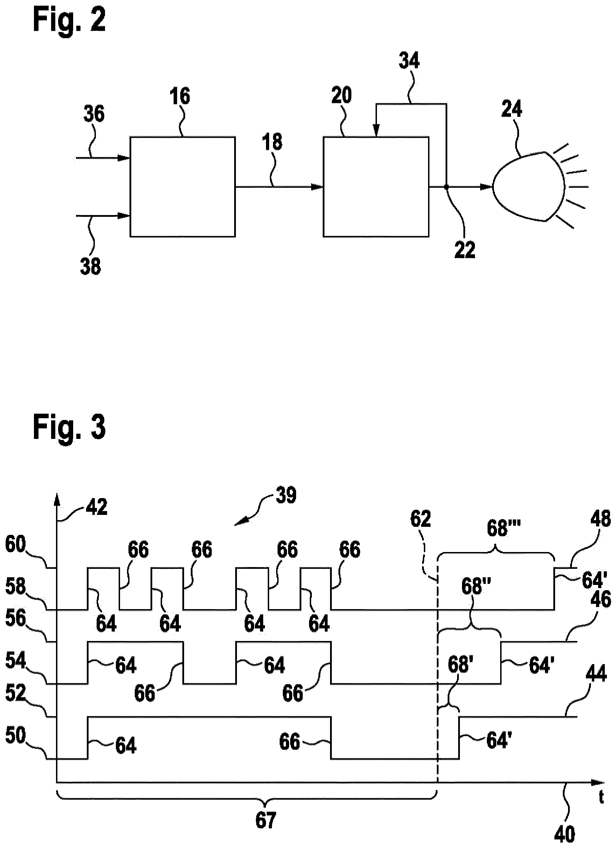

Figur 2 zeigt ein Blockschaltbild von Baugruppen des Kraftfahrzeugs 10 aus Fig. 1 zur Steuerung des Scheinwerfers 24. Zusätzlich sind zwei Signalpfade 36 und 38 dargestellt, über die der Signalgenerator 16 Informationen erfassen kann. Der Signalgenerator 16 ist hier ein Fernlichtassistent. Er empfängt über den Signalpfad 36 Informationen über weitere Verkehrsteilnehmer und über den Signalpfad 38 Informationen über eine Eigengeschwindigkeit des Kraftfahrzeugs 10. In Abhängigkeit dieser Informationen erzeugt der Signalgenerator 16 das erste Steuersignal.

Figur 3 zeigt ein Diagramm 39 mit einer Abszisse 40 und einer Ordinate 42. Die Abszisse 40 beschreibt die Zeit. Die Ordinate 42 beschreibt unterschiedliche Leuchtzustände. Innerhalb des Diagramms 39 sind drei unterschiedliche Kurven 44, 46 und 48 von Leuchtzuständen des Scheinwerfers 24 aus Fig. 1 dargestellt.

Der Wert der Ordinate 42, der mit der Bezugsziffer 50 bezeichnet ist, beschreibt einen Abblendbetrieb für die Kurve 44 der Leuchtzustände des Scheinwerfers 24. Der Wert der Ordinate 42, der mit der Bezugsziffer 52 bezeichnet ist, beschreibt einen Aufblendbetrieb für die Kurve 44 der Leuchtzustände des Scheinwerfers 24. Der Wert der Ordinate 42, der mit der Bezugsziffer 54 bezeichnet ist, beschreibt einen Abblendbetrieb für die Kurve 46 der Leuchtzustände des Scheinwerfers 24. Der Wert der Ordinate 42, der mit der Bezugsziffer 56 bezeichnet ist, beschreibt einen Aufblendbetrieb für die Kurve 46 der Leuchtzustände des Scheinwerfers 24. Der Wert der Ordinate 42, der mit der Bezugsziffer 58 bezeichnet ist, beschreibt einen Abblendbetrieb für die Kurve 48 der Leuchtzustände des Scheinwerfers 24. Der Wert der Ordinate 42, der mit der Bezugsziffer 60 bezeichnet ist, beschreibt einen Aufblendbetrieb für die Kurve 48 der Leuchtzustände des Scheinwerfers 24.

Zudem ist in dem Diagramm ein Zeitpunkt 62 dargestellt. Zu diesem Zeitpunkt erfolgt ein Erfassen des ersten Steuersignals durch die Steuer- und Auswerteeinheit 20. Weiter sind Änderungen 64 und 66 des Betriebs des Scheinwerfers 24 erkennbar. Die Änderung 64 beschreibt jeweils ein Aufblenden und die Änderung 66 jeweils ein Abblenden des Scheinwerfers 24.

Ein zeitlicher Verlauf des Betriebs des Scheinwerfers 24 wird für jede Kurve 44, 46 und 48 über ein Zeitintervall 67erfasst und ausgewertet. Das Zeitintervall 67 hat eine vordefinierte Größe, die sich hier vom Zeitpunkt Null bis zum Zeitpunkt 62 erstreckt. Durch Auswerten der Verläufe, also der Teile der Kurven 44, 46 oder 48 innerhalb des Zeitintervalls 67, wird jeweils eine erste Zeitspanne für eine Verzögerung bestimmt, die hier den Kurven 44, 46 und 48 entsprechend mit den Bezugsziffern 68', 68" oder 68'" bezeichnet sind. Die dem ersten Steuersignal nachfolgende Änderung 64' wird anschließend bezüglich des Zeitpunkts 62 entsprechend den jeweiligen ersten Zeitspannen 68', 68" oder 68" verzögert.

In den dargestellten Fällen erfolgt die Auswertung derart, dass bei einer geringen Zahl von Änderungen 64 und 66 in dem Zeitintervall 67 und bei einer hohen mittleren Dauer von den Änderungen 64 zu den Änderungen 66 nur eine geringere Verzögerung erfolgt. Zudem ist sie so ausgelegt, dass bei einer hohen Zahl von Änderungen 64 und 66 und bei einer niedrigen mittleren Dauer von den Änderungen 64 zu den Änderungen 66 in dem Zeitintervall 67 eine größere Verzögerung erfolgt.

Der zeitliche Verlauf der Kurve 44 weist genau eine Änderung 64 und eine Änderung 66 auf, wobei die Dauer zwischen den Änderungen 64 und 66 relativ groß ist. Somit wird die Änderung 64' nur um eine geringe erste Zeitspanne 68' verzögert.

Der zeitliche Verlauf der Kurve 46 weist zwei Änderungen 64 und zwei Änderungen 66 auf, wobei die mittlere Dauer von den Änderungen 64 zu den Änderungen 66 kleiner ist, als in dem zeitlichen Verlauf der Kurve 44. Somit liegt auch eine höhere Zahl an Änderungen 64 und 66 als in dem zeitlichen Verlauf der Kurve 44 vor. Daher wird die Änderung 64' um eine größere erste Zeitspanne 68" verzögert, als in der Kurve 44.

Der zeitliche Verlauf der Kurve 48 weist vier Änderungen 64 und vier Änderungen 66 auf, wobei die mittlere Dauer zwischen den Änderungen 64 und 66 kleiner ist, als in dem zeitlichen Verlauf der Kurve 46. Somit liegt auch eine höhere Zahl an Änderungen 64 und 66 als in dem zeitlichen Verlauf der Kurve 46 vor. Daher wird die Änderung 64' um eine noch größere erste Zeitspanne 68'" verzögert, als in der Kurve 46.

In weiteren Ausführungsbeispielen können die zeitlichen Verläufe der Betriebszustände des Scheinwerfers 24 in dem Zeitintervall bezüglich ihrer Frequenzen, insbesondere Schaltfrequenzen, ausgewertet werden. Dabei wird die Verzögerung entsprechend den obigen Fällen an die Frequenzen angepasst. Vorzugsweise wird dann um eine größere erste Zeitspanne 68'" verzögert, wenn eine höhere Frequenz detektiert wird, wie sie sich aus dem zeitlichen Verlauf der Kurve 48 ergibt. Weiter wird vorzugsweise dann um eine entsprechend kleinere erste Zeitspanne 68' verzögert, wenn eine niedrigere Frequenz detektiert wird, wie sie sich aus dem zeitlichen Verlauf der Kurve 44 ergibt.

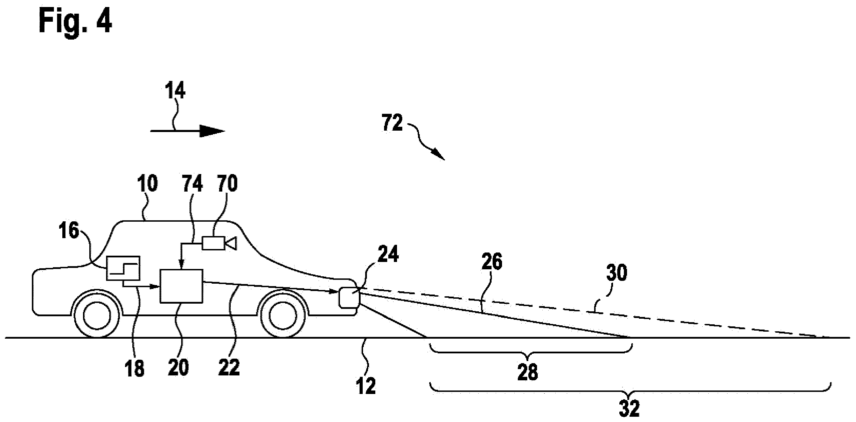

Figur 4 zeigt das Kraftfahrzeug 10 aus Figur 1 mit dem Unterschied, dass das Kraftfahrzeug 10 eine Kamera 70 aufweist, die einen Bereich einer Umgebung 72 des Kraftfahrzeugs erfasst. Als weiterer Unterschied werden von der Kamera 70 Umgebungsmesswerte erzeugt, die als Einflussgrößen über einen Signalpfad 74 von der Steuer- und Auswerteeinheit 20 erfasst werden.

Die Steuer- und Auswerteeinheit 20 zeichnet den zeitlichen Verlauf der Umgebungsmesswerte für ein festes Zeitintervall als Video auf. Das zum Zeitpunkt des Empfangens des ersten Steuersignals bereits aufgezeichnete Video wird durch die Steuer- und Auswerteeinheit 20 ausgewertet. Dann wird das erste Steuersignal in Abhängigkeit eines Ergebnisses der Auswertung verzögert. Die Auswertung erfolgt hier durch Erfassen und Auswerten von Merkmalen in dem Video.

In einem bevorzugten Ausführungsbeispiel wird der Zustand des Scheinwerfers 24 selbst in dem Verlauf der Umgebungsmesswerte als Merkmale ausgewertet.

In einem weiteren besonders bevorzugten Ausführungsbeispiel wird ein Erscheinen von entgegenkommenden und/oder vorausfahrenden Fremdfahrzeugen in dem Verlauf der Umgebungsmesswerte als Merkmale ausgewertet. Das Auswerten kann in diesen Ausführungsbeispielen entsprechend der in Fig.3 beschriebenen Vorgehensweise erfolgen, wobei die Häufigkeit und/oder Dauer von Merkmalsänderung die Verzögerung definieren. Als Häufigkeit und Dauer ist insbesondere die Anzahl entgegenkommender Fremdfahrzeuge und deren Verweildauer in dem Zeitintervall 67 geeignet.

In dem dargestellten Ausführungsbeispiel wird eine Änderung von einem Abblendbetrieb in einen Aufblendbetrieb dadurch verzögert, dass das erste Steuersignal gespeichert und nach Ablauf einer ersten Zeitspanne als zweites Steuersignal über den Signalpfad 22 ausgegeben wird. Die Dauer der ersten Zeitspanne ist dabei abhängig von dem Ergebnis der Auswertung.

In weiteren Ausführungsbeispielen wird das erste Steuersignal von der Steuer- und Auswerteeinheit 20 erfasst und in Abhängigkeit des Ergebnisses der Auswertung derart verändert, dass die Geschwindigkeit der Änderung des Betriebs des Scheinwerfers 24 selbst verlangsamt wird.

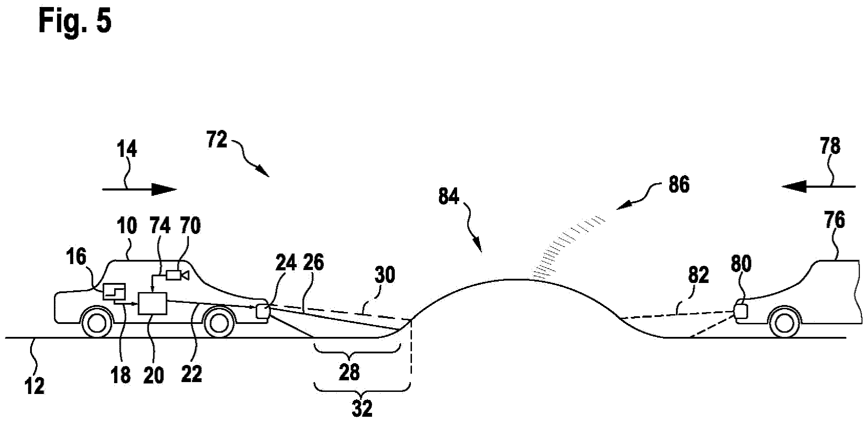

Figur 5 zeigt das Kraftfahrzeug 10 aus Figur 4. Zusätzlich ist ein entgegenkommendes Fremdfahrzeug 76 dargestellt, das sich auf der Fahrbahn 12 in einer entgegengesetzten Richtung eines Pfeils 78 zu dem Kraftfahrzeug 10 fortbewegt. Das Fremdfahrzeug 76 ist hier aus Gründen der Übersichtlichkeit nur teilweise dargestellt. Es weist einen Scheinwerfer 80 auf, der einen Lichtkegel 82 erzeugt, um einen Fahrbahnabschnitt zu beleuchten.

Das Kraftfahrzeug 10 und das Fremdfahrzeug 76 sind durch eine Fahrbahnerhöhung 84 optisch voneinander getrennt. Insbesondere zur Nachtzeit ergibt sich aufgrund des Lichtkegels 82 indirekt ein Lichtschein 86, der einen Koronaeffekt bildet. Dieser Lichtschein 86 wird von der Kamera 70 in der Umgebung 72 erfasst.

Die Steuer- und Auswerteeinheit verwendet bei Auswertung des Verlaufs der Umgegbungsmesswerte diesen Lichtschein 86 als Merkmal für eine Wahrscheinlichkeit eines Erscheinens des Fremdfahrzeugs 76 in einem Wirkbereich 30 des Scheinwerfers 24. Die Wahrscheinlichkeit wird hier beim Detektieren des Lichtscheins 86 als hoch bewertet. Somit wird die Änderung des Betriebs, hier ein Aufblenden, des Scheinwerfers stark verzögert. Dadurch wird ein kurzes Aufblenden des Scheinwerfers 24 verhindert, das sehr schnell von einem Abblenden des Scheinwerfers 24 gefolgt werden müsste, wenn das Fremdfahrzeug 76 in dem Wirkbereich 30 des Scheinwerfers 24 erscheint.

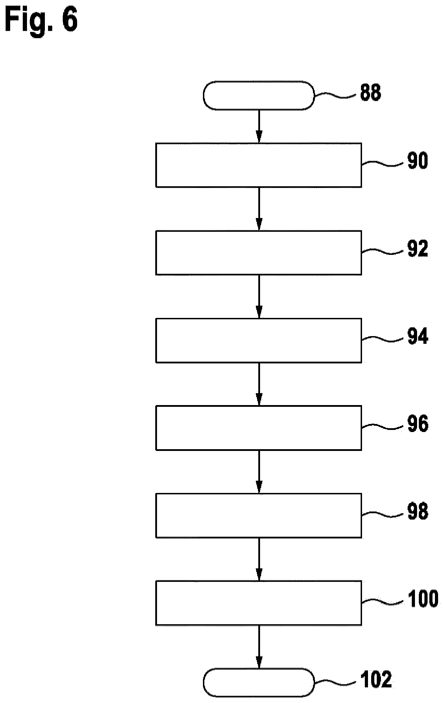

Figur 6 zeigt ein Flussdiagramm eines Ausführungsbeispiels für ein Verfahren zum Betreiben des Scheinwerfers 24 für das Kraftfahrzeug 10, der in mindestens zwei Leuchtzuständen 26 und 30 betrieben werden kann.

Das Verfahren beginnt in einem Startschritt 88.

In einem weiteren Schritt 90 wird von der Steuer- und Auswerteeinheit eine Einflussgröße erfasst, die eine zukünftige Änderung eines Betriebs des Scheinwerfers 24 von einem der Leuchtzustände in einen anderen der Leuchtzustände beeinflussen kann.

In einem weiteren Schritt 92 wird die erfasste Einflussgröße über ein Zeitintervall von der Steuer- und Auswerteeinheit 20 gespeichert, sodass ein zeitlicher Verlauf der Einflussgröße bereitgestellt wird.

In einem weiteren Schritt 94 wird das erste Steuersignal von der Steuer- und Auswerteeinheit 20 erfasst.

In einem weiteren Schritt 96 wird der zeitliche Verlauf der Einflussgröße ausgewertet, und ein Auswerteergebnis ermittelt.

In einem weiteren Schritt 98 wird in Abhängigkeit des Auswerteergebnisses eine Dauer des Verzögerns bestimmt.

In einem weiteren Schritt 100 wird der Betrieb des Scheinwerfers 24 in Abhängigkeit der Dauer des Verzögerns und des ersten Steuersignals gesteuert.

In einem Endschritt 102 wird das Verfahren beendet oder wiederholt.

## Patentansprüche

1. Verfahren zum Betreiben eines Scheinwerfers (24) für ein Kraftfahrzeug (10), der in mindestens zwei Leuchtzuständen (26, 50, 54, 58; 30, 52, 56, 60) betrieben werden kann, mit den Schritten:
- Erfassen mindestens einer Einflussgröße, die eine zukünftige Änderung (64') eines Betriebs des Scheinwerfers (24) von einem der Leuchtzustände (26, 50, 54, 58; 30, 52, 56, 60) in einen anderen der Leuchtzustände (30, 52, 56, 60; 26, 50, 54, 58) beeinflussen kann,
- Erfassen eines zeitlichen Verlaufs der Einflussgröße,
- Erfassen eines Steuersignals, das eine Änderung (64') des Betriebs des Scheinwerfers (24) von einem aktuellen Leuchtzustand (26, 50, 54, 58) in einen anderen der Leuchtzustände (30, 52, 56, 60) bewirken soll, und
- Steuern des Betriebs des Scheinwerfers (24) in Abhängigkeit des Steuersignals, wobei die Änderung (64') des Betriebs des Scheinwerfers (24) in Abhängigkeit des zeitlichen Verlaufs der Einflussgröße verzögert wird; wobei
- als Einflussgröße mindestens ein Umgebungsmesswert für eine Umgebung (72) des Kraftfahrzeugs (10) erfasst wird;
**dadurch gekennzeichnet, dass**
- aus dem zeitlichen Verlauf des Umgebungsmesswerts eine Wahrscheinlichkeit für ein Erscheinen eines Fremdfahrzeugs (76) in einem Wirkbereich des Scheinwerfers (24) bestimmt wird, wobei das Steuern in Abhängigkeit der Wahrscheinlichkeit verzögert wird.

2. Verfahren nach Anspruch 1, **dadurch gekennzeichnet, dass** die Änderung (64') des Betriebs dadurch verzögert wird, dass ein Beginn der Änderung (64') gegenüber einer verzögerungsfreien Änderung zumindest für eine erste Zeitspanne (68', 68", 68"') verhindert wird.

3. Verfahren nach einem der Ansprüche 1 oder 2, **dadurch gekennzeichnet, dass** die Änderung (64') des Betriebs dadurch verzögert wird, dass eine Geschwindigkeit der Änderung gegenüber der Geschwindigkeit einer verzögerungsfreien Änderung zumindest für eine zweite Zeitspanne verlangsamt wird.

4. Verfahren nach einem der Ansprüche 1 bis 3, **dadurch gekennzeichnet, dass** als Einflussgröße eine Zustandsgröße (64, 66) des Scheinwerfers (24) erfasst wird.

5. Verfahren nach Anspruch 4, **dadurch gekennzeichnet, dass** als die Zustandsgröße eine Änderung (64, 66) des Betriebs des Scheinwerfers (24) von einem der Leuchtzustände (26, 50, 54, 58; 30, 52, 56, 60) in einen anderen der Leuchtzustände (30, 52, 56, 60; 26, 50, 54, 58) erfasst wird.

6. Verfahren nach einem der Ansprüche 4 oder 5, **dadurch gekennzeichnet, dass** als die Zustandsgröße eine Dauer mindestens einer der Leuchtzustände (26, 50, 54, 58; 30, 52, 56, 60) erfasst wird.

7. Verfahren nach einem der Ansprüche 1 bis 68, **dadurch gekennzeichnet, dass** das Steuern in Abhängigkeit von Änderungen (64, 66), Dauern und/oder Frequenzen zumindest von Teilen des zeitlichen Verlaufs der Einflussgröße verzögert wird.

8. Steuer- und Auswerteeinheit (20) zum Betreiben eines Scheinwerfers (24) für ein Kraftfahrzeug (10), der in mindestens zwei Leuchtzuständen (26, 50, 54, 58; 30, 52, 56, 60) betrieben werden kann, die dazu ausgebildet ist mindestens eine Einflussgröße zu erfassen, die eine zukünftige Änderung (64') eines Betriebs des Scheinwerfers (24) von einem der Leuchtzustände (26, 50, 54, 58; 30, 52, 56, 60) in einen anderen der Leuchtzustände (30, 52, 56, 60; 26, 50, 54, 58) beeinflussen kann, einen zeitlichen Verlauf der Einflussgröße zu erfassen, ein Steuersignal zu erfassen, das eine Änderung (64') des Betriebs des Scheinwerfers (24) von einem aktuellen Leuchtzustand (26, 50, 54, 58) in einen anderen der Leuchtzustände (30, 52, 56, 60) bewirken soll, und den Betrieb des Scheinwerfers (24) in Abhängigkeit des Steuersignals zu steuern, wobei die Änderung (64') des Betriebs des Scheinwerfers (24) in Abhängigkeit des zeitlichen Verlaufs der Einflussgröße verzögert wird, wobei als Einflussgröße mindestens ein Umgebungsmesswert für eine Umgebung (72) des Kraftfahrzeugs (10) erfasst wird; **dadurch gekennzeichnet, dass** aus dem zeitlichen Verlauf des Umgebungsmesswerts eine Wahrscheinlichkeit für ein Erscheinen eines Fremdfahrzeugs (76) in einem Wirkbereich des Scheinwerfers (24) bestimmt wird, wobei das Steuern in Abhängigkeit der Wahrscheinlichkeit verzögert wird.

9. Computerprogrammprodukt mit einem Trägermedium, das einen Programmcode aufweist, der dazu ausgebildet ist, ein Verfahren nach einem der Ansprüche 1 bis 7 auszuführen, wenn der Programmcode auf einer Auswerte- und Steuereinheit (20) eines Kraftfahrzeugs (10) ausgeführt wird.

## Claims

1. Method for operating a headlamp (24) for a motor vehicle (10), which can be operated in at least two illumination states (26, 50, 54, 58; 30, 52, 56, 60), with the steps:
- detecting at least one influencing variable, which can influence a future change (64') of a mode of the headlamp (24) from one of the illumination states (26, 50, 54, 58; 30, 52, 56, 60) to another of the illumination states (30, 52, 56, 60; 26, 50, 54, 58),
- detecting a time profile of the influencing variable,
- detecting a control signal, which is intended to effect a change (64') of mode of the headlamp (24) from a current illumination state (26, 50, 54, 58) to another of the illumination states (30, 52, 56, 60), and
- controlling the mode of the headlamp (24) depending on the control signal, wherein the change (64') of mode of the headlamp (24) is delayed depending on the time profile of the influencing variable;
- wherein at least one ambient measurement value for the surroundings (72) of the motor vehicle (10) is detected as the influencing variable;
**characterized in that**
- a probability for an appearance of another vehicle (76) in a working range of the headlamp (24) is determined from the time profile of the ambient measurement value, wherein the control is delayed depending on the probability.

2. Method according to Claim 1, **characterized in that** the change (64') of mode is delayed by preventing a start of the change (64') for at least a first time period (68', 68", 68"') relative to a delay-free change.

3. Method according to one of Claims 1 and 2, **characterized in that** the change (64') of mode is delayed by reducing a speed of the change relative to the speed of a delay-free change for at least a second time period.

4. Method according to any one of Claims 1 to 3, **characterized in that** a state variable (64, 66) of the headlamp (24) is detected as an influencing variable.

5. Method according to Claim 4, **characterized in that** a change (64, 66) of mode of the headlamp (24) from one of the illumination states (26, 50, 54, 58; 30, 52, 56, 60) to another of the illumination states (30, 52, 56, 60; 26, 50, 54, 58) is detected as the state variable.

6. Method according to one of Claims 4 and 5, **characterized in that** a duration of at least one of the illumination states (26, 50, 54, 58; 30, 52, 56, 60) is detected as the state variable.

7. Method according to any one of Claims 1 to 6, **characterized in that** the control is delayed depending on changes (64, 66), durations and/or frequencies of at least parts of the time profile of the influencing variable.

8. Control and evaluation unit (20) for operating a headlamp (24) for a motor vehicle (10), which can be operated in at least two illumination states (26, 50, 54, 58; 30, 52, 56, 60), which is designed to detect at least one influencing variable, which can influence a future change (64') of mode of the headlamp (24) from one of the illumination states (26, 50, 54, 58; 30, 52, 56, 60) to another of the illumination states (30, 52, 56, 60; 26, 50, 54, 58), to detect a time profile of the influencing variable, to detect a control signal, which is intended to effect a change (64') of mode of the headlamp (24) from a current illumination state (26, 50, 54, 58) to another of the illumination states (30, 52, 56, 60), and to control the operation of the headlamp (24) depending on the control signal, wherein the change (64') of mode of the headlamp (24) is delayed depending on the time profile of the influencing variable, wherein at least one ambient measurement value for the surroundings (72) of the motor vehicle (10) is detected as the influencing variable; **characterized in that** a probability for an appearance of another vehicle (76) in a working range of the headlamp (24) is determined from the time profile of the ambient measurement value, wherein the control is delayed depending on the probability.

9. Computer program product with a carrier medium that comprises a program code that is designed to carry out a method according to any one of Claims 1 to 7 if the program code is implemented on an evaluation and control unit (20) of a motor vehicle (10).

## Revendications

1. Procédé de fonctionnement d'un phare (24) pour un véhicule automobile (10) qui peut être actionné au moins dans deux états d'éclairage (26, 50, 54, 58 ; 30, 52, 56, 60), avec les étapes de :
- saisie d'au moins une valeur d'influence, qui peut influencer une modification future (64') d'un fonctionnement du phare (24) d'un des états d'éclairage (26, 50, 54, 58 ; 30, 52, 56, 60) à un autre des états d'éclairage (30, 52, 56, 60 ; 26, 50, 54, 58),
- saisie d'un profil temporel de la valeur d'influence,
- saisie d'un signal de commande, qui doit causer une modification (64') du fonctionnement du phare (24) d'un état d'éclairage actuel (26, 50, 54, 58) à un autre des états d'éclairage (30, 52, 56, 60), et
- commande du fonctionnement du phare (24) en fonction du signal de commande, la modification (64') du fonctionnement du phare (24) étant retardée en fonction du profil temporel de la valeur d'influence,
- au moins une valeur de mesure environnementale pour un environnement (72) du véhicule automobile (10) étant saisie en tant que valeur d'influence,
**caractérisé en ce qu'**
- une probabilité d'une apparition d'un véhicule étranger (76) dans une zone active du phare (24) est déterminée à partir du profil temporel de la valeur de mesure environnementale, la commande étant retardée en fonction de la probabilité.

2. Procédé selon la revendication 1, **caractérisé en ce que** la modification (64') du fonctionnement est retardée par le fait qu'un début de la modification (64') par rapport à une modification sans retard est évité au moins pour une première période de temps (68', 68", 68"').

3. Procédé selon l'une quelconque des revendications 1 ou 2, **caractérisé en ce que** la modification (64') du fonctionnement est retardée par le fait qu'une vitesse de la modification par rapport à la vitesse d'une modification sans retard est ralentie au moins pour une deuxième période de temps.

4. Procédé selon l'une quelconque des revendications 1 à 3, **caractérisé en ce qu'**une valeur d'état (64, 66) du phare (24) est saisie en tant que valeur d'influence.

5. Procédé selon la revendication 4, **caractérisé en ce qu'**une modification (64, 66) du fonctionnement du phare (24) d'un des états d'éclairage (26, 50, 54, 58 ; 30, 52, 56, 60) à un autre des états d'éclairage (30, 52, 56, 60 ; 26, 50, 54, 58) est saisie en tant que la valeur d'état.

6. Procédé selon l'une quelconque des revendications 4 ou 5, **caractérisé en ce qu'**une durée d'au moins un des états d'éclairage (26, 50, 54, 58 ; 30, 52, 56, 60) est saisie en tant que la valeur d'état.

7. Procédé selon l'une quelconque des revendications 1 à 6, **caractérisé en ce que** la commande est retardée en fonction des modifications (64, 66), de la durée et/ou des fréquences au moins des parties du profil temporel de la valeur d'influence.

8. Unité de commande et d'exploitation (20) pour le fonctionnement d'un phare (24) pour un véhicule automobile (10), qui peut être actionné dans au moins deux états d'éclairage (26, 50, 54, 58 ; 30, 52, 56, 60), qui est configurée à cet effet pour saisir au moins une valeur d'influence, qui peut influencer une modification future (64') d'un fonctionnement du phare (24) d'un des états d'éclairage (26, 50, 54, 58 ; 30, 52, 56, 60) à un autre des états d'éclairage (30, 52, 56, 60 ; 26, 50, 54, 58), pour saisir un profil temporel de la valeur d'influence, pour saisir un signal de commande qui doit causer une modification (64') du fonctionnement du phare (24) d'un état d'éclairage actuel (26, 50, 54, 58) à un autre des états d'éclairage (30, 52, 56, 60) et pour commander le fonctionnement du phare (24) en fonction du signal de commande, la modification (64') du fonctionnement du phare (24) étant retardée en fonction du profil temporel de la valeur d'influence, au moins une valeur de mesure environnementale pour un environnement (72) du véhicule automobile (10) étant saisie en tant que valeur d'influence, **caractérisée en ce qu'**une probabilité d'une apparition d'un véhicule étranger (76) dans une zone active du phare (24) est déterminée à partir du profil temporel de la valeur de mesure environnementale, la commande étant retardée en fonction de la probabilité.

9. Produit de programmation informatique avec un moyen de support, qui comporte un code de programmation, qui est constitué à cet effet pour exécuter un procédé selon l'une quelconque des revendications 1 à 7, si le code de programmation est exécuté sur une unité de commande et d'exploitation (20) d'un véhicule automobile (10).
